# FASCICULE DE BREVET EUROPEEN

(11) **EP 2 691 285 B1**
(45) Date de publication et mention de la délivrance du brevet: **31.12.2014**
(21) Numéro de dépôt: 12706631.4
(22) Date de dépôt: 26.01.2012
(51) Int. Cl.: B62D 3/12, F16H 55/28

(54) **DISPOSITIF DE POUSSOIR AVEC RATTRAPAGE DE JEU POUR DIRECTION À CRÉMAILLÈRE DE VÉHICULE AUTOMOBILE**
SCHIEBEVORRICHTUNG MIT SPIELFREIEM SYSTEM DIE ZAHNSTANGENLENKUNG EINES KRAFTFAHRZEUGES
PUSH DEVICE WITH ANTI-BACKLASH SYSTEM FOR MOTOR VEHICLE RACK STEERING

(30) Priorité: 30.03.2011 FR 1152654
(43) Date de publication de la demande: 05.02.2014
(73) Titulaire: JTEKT Europe, 69540 Irigny (FR)
(72) Inventeur: VIGUIER, Olivier, F-69290 Grezieu la Varenne (FR); BROCHOT, Patrice, F-69600 Oullins (FR); REY, Laurent, F-69100 Villeurbanne (FR)
(74) Mandataire: Chevalier, Renaud Philippe
(86) Numéro de dépôt international: PCT/FR2012/050168
(87) Numéro de publication internationale: WO 2012/131200

(56) Documents cités:
- WO-A1-2010/010272
- FR-A1- 2 938 034

## Description

La présente invention concerne, de façon générale, le domaine technique des directions à crémaillère des véhicules automobiles. Plus particulièrement, cette invention s'intéresse au dispositif dit « ligne poussoir » ou plus simplement « poussoir » d'une direction à crémaillère, dont la fonction est de maintenir la crémaillère en contact d'engrènement avec le pignon de direction tout en compensant les défauts de denture, ce dispositif ayant aussi pour rôle de faciliter le montage du pignon dans le carter de la direction à crémaillère. Encore plus particulièrement, l'invention se rapporte à un dispositif de poussoir du type dit « à excentrique », qui est pourvu d'un système de rattrapage automatique du jeu entre le pignon et la crémaillère.

Dans un système de direction à crémaillère de véhicule automobile, un pignon de direction est lié en rotation avec une colonne de direction, manoeuvrée à l'aide du volant de conduite du véhicule, le plus souvent avec l'aide d'une assistance hydraulique ou électrique. Le pignon de direction est en prise avec une crémaillère, montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction au pignon, est convertie en un mouvement de translation de la crémaillère qui, par l'intermédiaire des biellettes, provoque l'orientation des roues directrices pour un braquage à droite ou pour un braquage à gauche.

Dans un tel système de direction, le mécanisme pignon-crémaillère, lié aux roues avant du véhicule par l'intermédiaire des biellettes, est soumis à des remontées d'efforts, à des chocs et à des vibrations, suivant l'état de la chaussée parcourue par le véhicule. En raison de l'angle formé par les biellettes avec la crémaillère, il peut alors se produire un effort sur la crémaillère, qui risque de l'écarter du pignon. Pour cette raison, la crémaillère est habituellement appliquée de façon permanente contre le pignon par un dispositif dit de « poussoir », qui agit élastiquement sur le dos de la crémaillère dans la région du pignon pour presser fortement la denture de la crémaillère contre le pignon. Grâce au poussoir, les défauts d'engrènement de la crémaillère avec le pignon sont compensés, et ce poussoir assure aussi le guidage de la crémaillère, en contrôlant l'effort de coulissement de la crémaillère dans le carter de direction.

Dans sa forme de réalisation la plus habituelle, le dispositif de poussoir comprend un poussoir proprement dit, qui est une pièce rigide montée mobile en translation de manière sensiblement perpendiculaire à l'axe longitudinal de la crémaillère, et sollicitée vers le dos de la crémaillère par des moyens élastiques, de manière à s'appuyer sur le dos de la crémaillère par une partie terminale de forme adaptée, en particulier une partie de profil concave, constituée habituellement par un patin de friction permettant d'obtenir un faible coefficient de friction entre le patin et la crémaillère. Les moyens élastiques peuvent être constitués par un ressort hélicoïdal seul ou par une rondelle élastique métallique ou en élastomère, ou par une combinaison de tels éléments élastiques. Ces moyens élastiques prennent appui sur une vis de réglage, qui permet un réglage du recul du poussoir et qui matérialise la butée de fin de course du poussoir.

Un tel dispositif de poussoir permet d'obtenir un contact permanent entre le pignon et la crémaillère, tout en compensant les défauts des dentures de ces organes mécaniques. Les moyens élastiques, qui agissent entre la vis de réglage et le poussoir, compensent aussi l'usure en fonctionnement du pignon de la crémaillère et du patin de friction, mais le recul du poussoir, autrement dit l'écart entre le poussoir et sa butée constituée par la vis de réglage, se trouve augmenté d'une valeur égale à l'usure cumulée des composants.

Les principaux inconvénients d'un tel dispositif de poussoir, et de l'accroissement du recul qui n'est pas compensé, sont une probabilité d'apparition de bruit en cas de roulage du véhicule sur une chaussée dégradée, et une augmentation du moment fléchissant dans la zone de contact des dentures du pignon et de la crémaillère, notamment en cas de fonctionnement à pleine charge. Un autre inconvénient de ce dispositif de poussoir connu est qu'il nécessite un réglage coûteux sur une ligne d'assemblage.

On connaît aussi des dispositifs de poussoirs de conception différente dits poussoirs « à excentrique », tels que décrits par exemple dans les documents de brevets US 6247375 B1, FR 2219868, EP 0770538 A2 et US 2008/0190229 A1. Dans de tels dispositifs, un patin rotatif de forme annulaire ou arquée comprend une partie excentrée qui pousse la crémaillère vers le pignon, le patin rotatif étant monté tournant dans un carter, autour d'un axe parallèle à l'axe longitudinal de la crémaillère. La périphérie interne du patin est excentrée par rapport à sa périphérie externe, de telle manière que, lorsque le patin tourne dans le carter, sa périphérie excentrée forme une portée appliquée contre le dos de la crémaillère et repoussant celle-ci vers les dents du pignon, afin de les maintenir en prise avec la crémaillère.

Dans une réalisation particulière de poussoir à excentrique, décrite dans la demande de brevet français publiée FR 2 938 034A1 au nom du Demandeur, le patin rotatif est monté tournant sur un boîtier support, lui-même monté coulissant dans le carter de direction, suivant une direction parallèle au plan de la denture de la crémaillère et orthogonale à l'axe longitudinal de cette crémaillère. Un premier élément élastique tel qu'un ressort de compression est disposé entre la paroi du boîtier coulissant et le patin rotatif, pour solliciter ce patin en rotation dans un sens prédéfini. Un autre élément élastique tel qu'un joint torique est disposé entre le boîtier coulissant et une partie fixe, telle que le carter de direction. Le patin rotatif comporte un bras radial, sur lequel s'exerce l'effort du ressort de compression. Ce patin présente une forme arquée et « en coin » qui permet au dispositif d'être particulièrement compact.

Dans une autre réalisation particulière de poussoir à excentrique, décrite dans la demande de brevet français publiée FR 2 951 797 A1 au nom du Demandeur, il est prévu un mécanisme de compensation de jeu, avec un organe de poussée appuyé contre un bras radial du patin rotatif sous l'effort d'un ressort de compression inséré entre l'organe de poussée et un élément solidaire du support du patin. Une butée mobile, montée tournante relativement audit élément, comporte des dentures à dents étagées qui coopèrent avec des crans de l'organe de poussée, la butée mobile étant liée par l'intermédiaire d'un ressort de torsion audit élément. Ainsi, les crans de l'organe de poussée coopèrent successivement avec les dents étagées de la butée mobile, pour des rattrapages de jeux successifs au cours de la vie du système de direction.

Il peut encore être fait référence au document de brevet WO 2010/010272 A1, qui divulgue les caractéristiques du préambule de la revendication 1.

La présente invention vise à perfectionner les dispositifs de poussoirs à excentrique, et plus particulièrement les poussoirs possédantune fonction de rattrapage de jeu automatique, en fournissant une solution particulièrement robuste du point de vue de sa tenue mécanique, tout en conservant une simplicité de structure et de fabrication.

A cet effet, l'invention a pour objet un dispositif de poussoir à excentrique pour direction à crémaillère de véhicule automobile, le dispositif de poussoir comprenant un patin de forme annulaire dont la périphérie interne est excentrée par rapport à la périphérie externe, ledit patin étant monté tournant et sollicité en rotation dans un sens par des moyens à ressort et étant prévu pour être appliqué par sa périphérie interne excentrée contre le dos de la crémaillère pour repousser celle-ci vers les dents du pignon de direction, le dispositif de poussoir à excentrique étant pourvu d'un mécanisme de rattrapage automatique de jeu, ce dispositif de poussoir à excentrique étant caractérisé par le fait que le mécanisme de rattrapage de jeu comprend une bague extérieure fixe, à l'intérieur de laquelle est monté tournant le patin, la bague extérieure étant crantée intérieurement et le patin étant pourvu à sa périphérie externe de moyens d'accrochage coopérant avec les crans de la bague extérieure, ou inversement le patin étant cranté extérieurement et la bague extérieure étant pourvue intérieurement de moyens d'accrochage coopérant avec les crans du patin, et les moyens à ressort sollicitant le patin en rotation relativement à la bague extérieure.

On obtient ainsi un dispositif de poussoir à excentrique avec rattrapage de jeu qui est simple, compact et robuste, en raison notamment de sa configuration « concentrique » lui permettant de mieux reprendre les efforts et de l'inutilité de tout boîtier, la bague extérieure demandant simplement à être immobilisée dans le carter de direction. La seule contrainte est de devoir placer le dispositif en position légèrement décalée axialement par rapport à la position du pignon de direction et au point d'engrènement de ce pignon avec la crémaillère, afin de faciliter l'installation du dispositif.

Dans un mode de réalisation préféré de ce dispositif de poussoir à excentrique, la bague extérieure comporte intérieurement plusieurs séries de crans, réparties sur sa circonférence, tandis que le patin est pourvu à sa périphérie externe de lames élastiques saillantes, espacées circonférentiellement et coopérant avec les crans de la bague extérieure, ou inversement le patin comporte extérieurement plusieurs séries de crans tandis que la bague extérieure comporte intérieurement des lames élastiques espacées, chaque lame élastique étant prévue pour coopérer avec l'une des séries de crans.

Avantageusement, la disposition des séries de crans de la bague extérieure ou du patin rotatif et des lames élastiques du patin ou de la bague est telle que, lorsque certains crans sont en prise avec les lames élastiques correspondantes, d'autres crans appartenant à d'autres séries se trouvent en attente, ce qui permet de multiplier les positions angulaires d'accrochage du patin relativement à la bague extérieure, sans avoir à réaliser des crans trop petits. La configuration des crans est aussi telle que, lors de chaque passage d'un cran à un autre, un jeu fonctionnel est créé entre le pignon et la crémaillère, ce jeu restant très réduit.

Dans un mode de réalisation avantageux, la bague extérieure comporte intérieurement une partie annulaire sur laquelle sont formées les séries de crans, et au moins une autre partie annulaire adjacente à la précédente, sur laquelle sont formées des surfaces de contact et de guidage coopérant avec la périphérie externe du patin.

Ces surfaces de contact et de guidage peuvent appartenir à des formations en relief de la bague extérieure, qui comportent encore des épaulements circonférentiels pour l'arrêt en translation axiale du patin.

La bague extérieure peut comporter, extérieurement, au moins un ergot prévu pour l'immobilisation en rotation de cette bague extérieure, relativement au carter de direction dans lequel est montée ladite bague.

Grâce au mécanisme de rattrapage de jeu et au guidage complet du patin à l'intérieur de la bague, le dispositif de poussoir à excentrique objet de l'invention maintient en permanence un jeu réduit entre le pignon et la crémaillère du système de direction, ce qui élimine les bruits habituels des poussoirs traditionnels. En particulier, la configuration du dispositif supprime les bruits de basculement observés dans le cas des poussoirs conventionnels, lesquels basculent de part et d'autre de l'axe de la crémaillère.

Selon un mode d'exécution, les moyens à ressort comprennent au moins un ressort interne, monté entre une jambe de force intérieure de la bague extérieure et une surface d'appui prévue sur le patin, le ressort interne sollicitant ainsi le patin en rotation dans le sens désiré. Dans ce cas toutes les fonctions sont réalisées à l'intérieur du dispositif.

Selon un autre mode d'exécution, les moyens à ressort comprennent un ressort externe, agissant par l'intermédiaire d'un doigt de poussée sur le patin, auquel cas la bague extérieure peut comporter une ouverture traversée par le doigt de poussée pour atteindre le patin. La localisation externe du ressort permet de mettre en oeuvre un ressort plus gros, si cela s'avère nécessaire.

L'invention sera mieux comprise à l'aide de la description qui suit, en référence au dessin schématique représentant, à titre d'exemples, quelques formes d'exécution de ce dispositif de poussoir à excentrique.
Figure 1 est une vue en perspective d'un dispositif de poussoir conforme à la présente invention, dans une première forme de réalisation,
Figure 2 est une autre vue en perspective du dispositif de poussoir de la figure 1,
Figure 3 est une vue en perspective de la seule bague extérieure du dispositif de poussoir des figures 1 et 2,
Figure 4 est une autre vue en perspective de cette bague extérieure,
Figure 5 est une vue de face de la bague extérieure des figures 3 et 4,
Figure 6 est une vue en perspective du patin rotatif seul,
Figure 7 est une vue de face, montrant le patin rotatif, monté à l'intérieur de la bague extérieure,
Figures 8 à 13 sont des schémas illustrant le fonctionnement du dispositif de poussoir à excentrique selon la première forme de réalisation,
Figure 14 est une vue en perspective d'un dispositif de poussoir conforme à la présente invention, dans une seconde forme de réalisation,
Figure 15 est une autre vue en perspective du dispositif de poussoir de la figure 14,
Figure 16 représente très schématiquement un exemple d'implantation, dans un système de direction, du dispositif de poussoir selon la première forme de réalisation de l'invention,
Figure 17 représente très schématiquement un exemple d'implantation, dans un système de direction, du dispositif de poussoir selon la seconde forme de réalisation de l'invention.

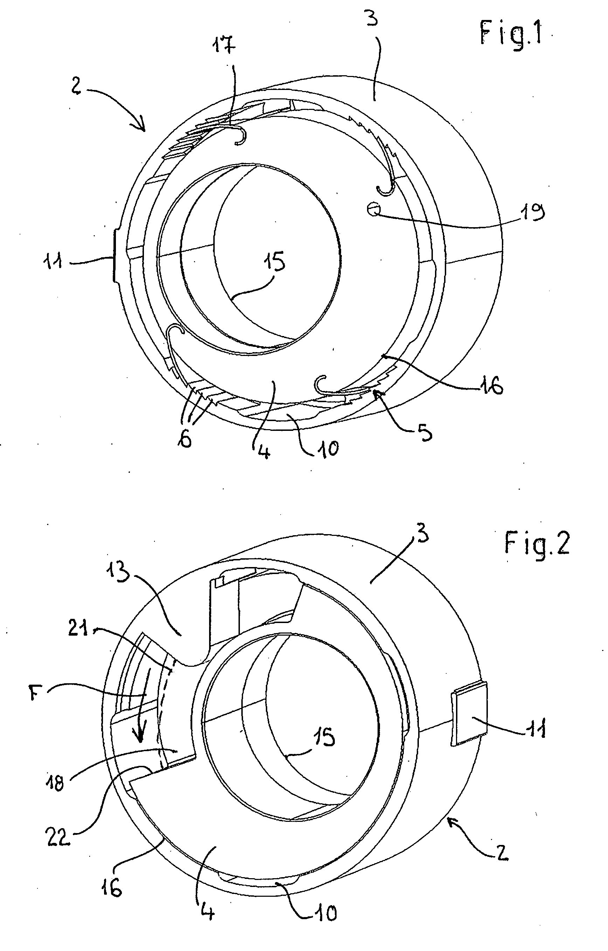

Une première forme de réalisation du dispositif de poussoir à excentrique, désigné dans son ensemble par la référence 2, est représentée sur les figures 1 à 13.

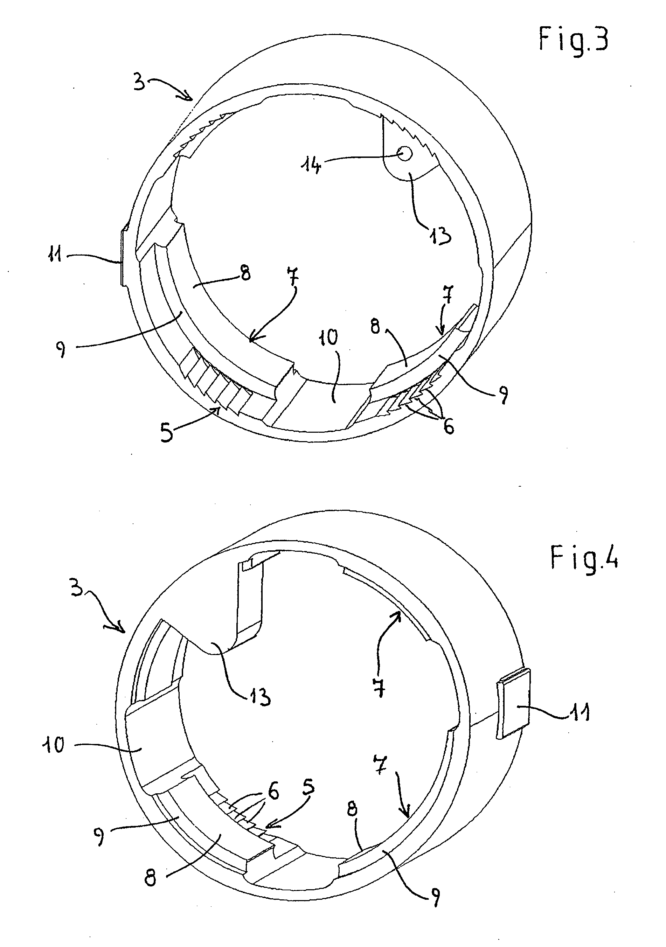

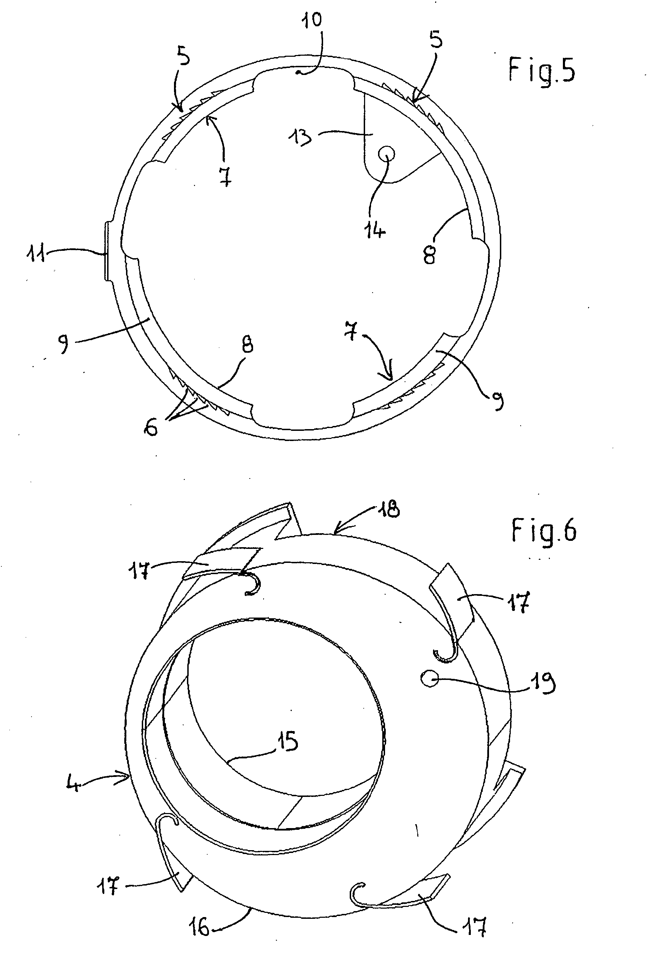

Ce dispositif de poussoir 2 comprend une bague extérieure fixe 3, montrée seule sur les figures 3 à 5, et un patin rotatif 4, montré seul sur la figure 6 mais prévu pour être monté tournant à l'intérieur de la bague extérieure 3, comme le montrent les figures 1, 2 et 7.

La bague extérieure 3, visible plus particulièrement sur les figures 3 à 5, comporte intérieurement deux parties annulaires adjacentes. Sur une première partie annulaire de la bague extérieure 3 sont formées plusieurs séries 5 de crans 6, par exemple quatre séries de crans, réparties sur la circonférence de cette partie annulaire. Sur une seconde partie annulaire de la bague extérieure 3 sont prévues des formations en relief 7 qui comportent des surfaces cylindriques 8 de contact et de guidage pour le patin 4, ainsi que des épaulements circonférentiels 9. Les formations en relief 7 sont situées en correspondance avec les séries 5 de crans 6, de manière à ménager des zones évidées 10 facilitant la mise en place du patin 4.

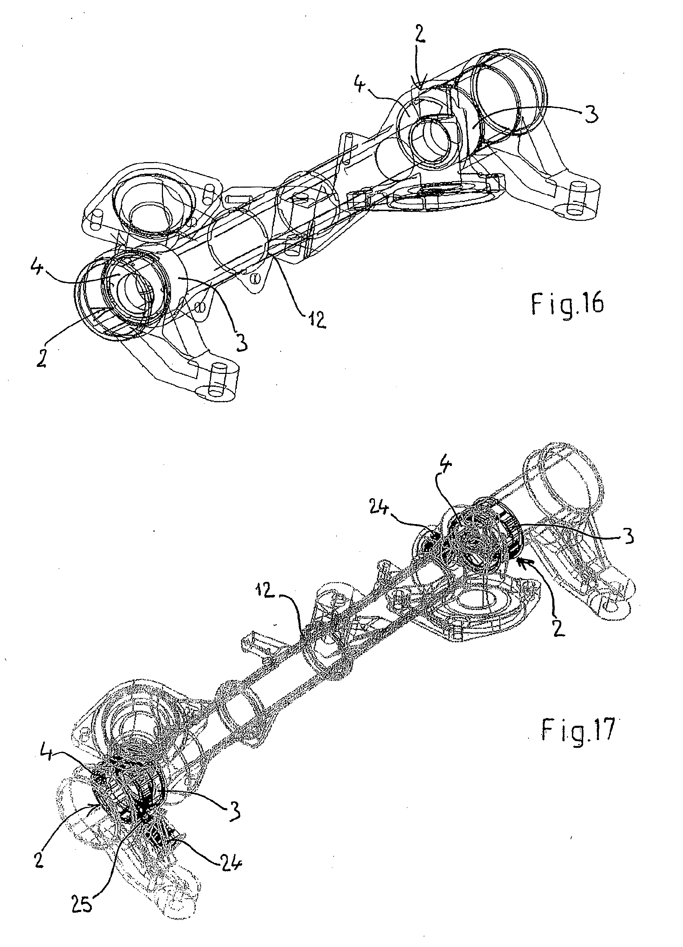

La bague extérieure 3 comporte, extérieurement, un ergot 11 prévu pour son immobilisation en rotation relativement à un carter de direction 12 (voir aussi figure 16). Dans la forme de réalisation considérée, la bague extérieure 3 comporte aussi, intérieurement, une jambe de force 13 d'orientation sensiblement radiale, prévue pour l'appui d'un ressort interne (comme décrit plus bas). Dans la jambe de force 13 est percé un trou 14 apte à recevoir un ergot amovible, utilisable lors des opérations de montage du dispositif de poussoir 2.

Le patin annulaire 4, visible plus particulièrement sur la figure 6, présente une périphérie interne 15 circulaire, qui est excentrée par rapport à sa périphérie externe 16 elle aussi circulaire. Ce patin annulaire 4 est pourvu, sur sa périphérie externe 16, de lames élastiques saillantes 17 espacées circonférentiellement, les lames élastiques 17 étant en même nombre que les séries 5 de crans 6, par exemple au nombre de quatre.

Dans le patin annulaire 4 est ménagé un évidement 18, prévu pour loger le ressort interne. Ce patin annulaire 4 comporte encore un trou 19 apte à recevoir l'ergot amovible utilisable lors des opérations de montage.

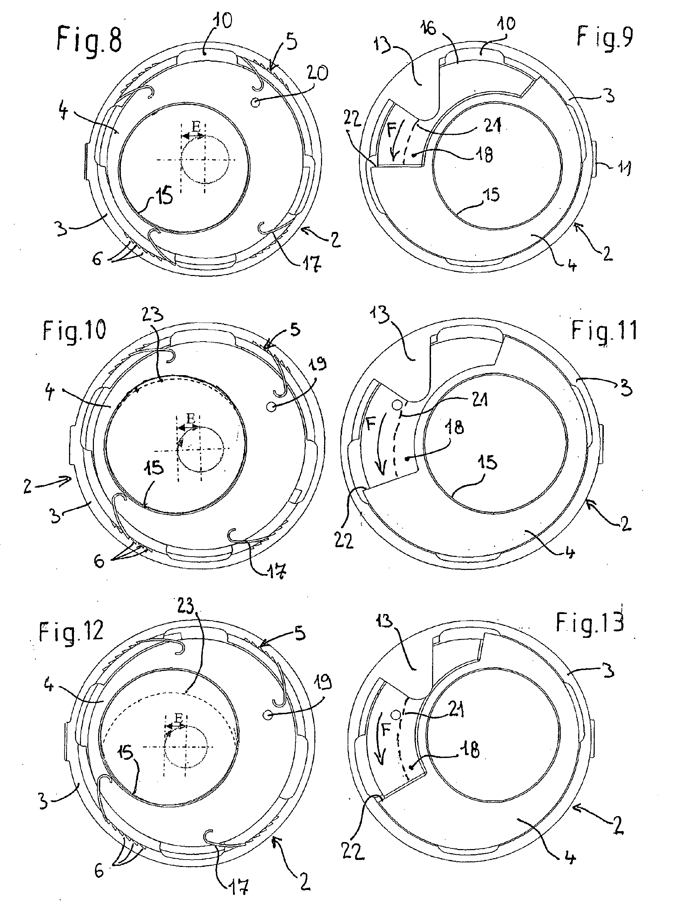

Le patin rotatif 4, ainsi constitué, est mis en place à l'intérieur de la bague extérieure 3, les zones évidées 10 de cette bague facilitant l'introduction des lames élastiques 17 du patin, qui initialement se trouvent à l'état libre. Dans une position initiale, montrée sur les schémas des figures 8 et 9, un ergot 20 est introduit dans les trous 14 et 19 respectifs de la bague 3 et du patin 4, ces trous étant mis en correspondance, pour immobiliser temporairement le patin 4 relativement à la bague 3. Un ressort interne 21 est alors mis en place dans l'évidement 18, de manière à prendre appui d'une part contre la jambe de force 13 de la bague 3 et d'autre part contre une surface 22 du patin 4, le ressort 21 exerçant une force de poussée F dans le sens circonférentiel. La périphérie interne 15 du patin 4, ainsi monté, présente une excentration E par rapport à la bague 3.

Après retrait de l'ergot 20, le patin 4 se trouve libéré relativement à la bague 3, et le ressort 21 lui aussi libéré sollicite en rotation le patin 4. La crémaillère dont la position initiale est symbolisée par des pointillés en 23 traversant l'ouverture excentrée du patin 4, la force de poussée F déplace en rotation le patin 4 jusqu'à une position initiale de contact et d'équilibre, dans laquelle les lames élastiques 17 du patin 4 sont accrochées sur certains crans 6 de la bague 3.

Au cours de la vie du système de direction et en fonction de son usure, le patin 4 sollicité par le ressort interne 21 va tourner et ses lames élastiques 17 vont « sauter » de cran en cran. Le rattrapage de jeu se fait ainsi de manière automatique, la crémaillère 23 suivant l'excentration E et se rapprochant du pignon de direction.Les figures 10 et 11 montrent une position intermédiaire des lames élastiques 17, et les figures 12 et 13 illustrent une position en fin de vie, avec un fort rattrapage d'usure, les lames élastiques 17 étant parvenues vers les crans 6 terminaux des séries 5 de crans.

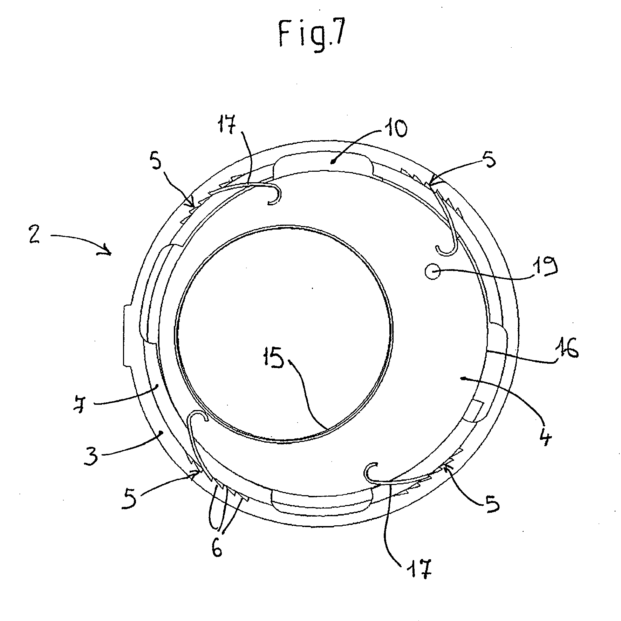

En se référant de nouveau à la figure 7, il est à noter que, dans une quelconque position intermédiaire, deux des quatre lames élastiques 17 du patin 4 sont en prise avec des crans 6 appartenant aux séries 5 correspondantes, tandis que les deux autres lames élastiques 17 du patin 4 ne sont en prise avec aucun cran 6 des deux autres séries 5 ; autrement dit, les crans 6 de ces autres séries 5 se trouvent alors « en attente ». Au prochain « saut », ces autres lames élastiques 17 vont coopérer avec les crans 6, puis de nouveau les premières lames élastiques, et ainsi de suite....

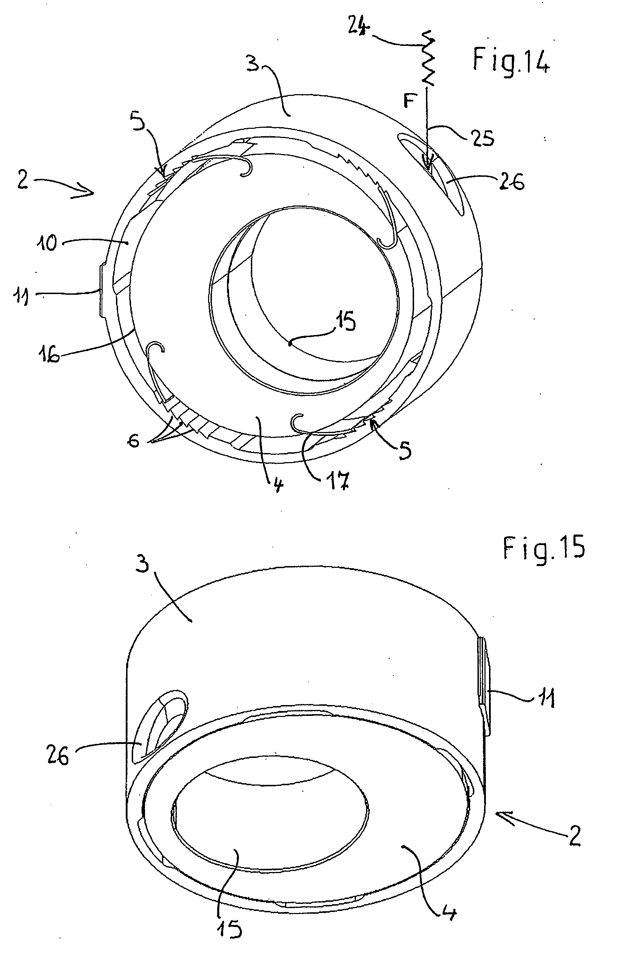

Les figures 14 et 15, sur lesquelles les éléments correspondant à ceux décrits précédemment sont désignés par les mêmes références, représentent une seconde forme de réalisation du dispositif de poussoir à excentrique 2. La seconde forme de réalisation se distingue de la première par le fait que le ressort interne, sollicitant le patin annulaire 4, est remplacé par un ressort externe, c'est-à-dire situé du côté radialement extérieur de la bague 3.

Le ressort externe est en particulier un ressort hélicoïdal 24, logé dans le carter de direction 12 comme le montre la figure 17. Le ressort hélicoïdal 24, qui exerce un effort de poussée F, transmet cet effort au patin 4 par l'intermédiaire d'un doigt de poussée 25 qui possède une orientation tangentielle par rapport au patin 4. La bague extérieure 3 comporte une ouverture traversante 26, qui est traversée de part en part par le doigt de poussée 25 pour que ce dernier puisse atteindre le patin 4, placé à l'intérieur de la bague 3.

Le choix des matériaux constitutifs de la bague 3 et du patin 4, qui sont en particulier des matériaux plastiques moulables, est tel qu'il réponde au mieux aux exigences fonctionnelles de glissement du patin 4 relativement à la bague 3, et de tenue mécanique et thermique, ainsi qu'aux contraintes de moulage.

La figure 16 illustre, dans le cas d'un système de direction à double pignon, l'implantation du dispositif de poussoir à excentrique selon la première forme de réalisation précédemment décrite. Deux dispositifs de poussoir à excentrique 2, de structure similaire, sont ainsi implantés dans le carter de direction 12, ces deux dispositifs ayant leurs patins 4 respectifs traversés par la même crémaillère (non représentée).

D'une manière similaire, la figure 17 illustre, encore dans le cas d'un système de direction à double pignon, l'implantation du dispositif de poussoir à excentrique selon la seconde forme de réalisation précédemment décrite. Le carter de direction 12 comporte ici des excroissances 27 creuses, aptes à loger les ressorts hélicoïdaux 24 externes respectifs des deux dispositifs de poussoir à excentrique 2.

On ne s'écarterait pas du cadre de l'invention, telle que définie dans les revendications annexées :
- en ayant recours à toutes dispositions équivalentes, notamment en remplaçant les lames élastiques du patin rotatif, qui coopèrent avec les crans de la bague extérieure, par des cliquets plus robustes, bien que plus complexes mécaniquement ;
- en intervertissant les crans et les lames élastiques, c'est-à-dire en prévoyant les crans sur le patin rotatif et les lames élastiques sur la bague extérieure fixe ;
- en adaptant la largeur des zones crantées de la bague extérieure ou du patin rotatif, donc la largeur des crans eux-mêmes pour ajuster la tenue mécanique des lames élastiques ou des cliquets ;
- en destinant ce dispositif de poussoir à des systèmes de direction de tous types : directions manuelles, directions assistées électriques, directions assistées hydrauliques, à un ou deux pignons.

## Revendications

1. Dispositif de poussoir à excentrique pour direction à crémaillère de véhicule automobile, le dispositif de poussoir (2) comprenant un patin (4) de forme annulaire dont la périphérie interne (15) est excentrée par rapport à la périphérie externe (16), ledit patin (4) étant monté tournant et sollicité en rotation dans un sens par des moyens à ressort et étant prévu pour être appliqué par sa périphérie interne (15) excentrée contre le dos de la crémaillère (23) pour repousser celle-ci vers les dents du pignon de direction, le dispositif de poussoir (2) à excentrique étant pourvu d'un mécanisme de rattrapage automatique de jeu, **caractérisé en ce que** le mécanisme de rattrapage de jeu comprend une bague extérieure (3) fixe, à l'intérieur de laquelle est monté tournant le patin (4), la bague extérieure (3) étant crantée intérieurement et le patin (4) étant pourvu à sa périphérie externe (16) de moyens d'accrochage coopérant avec les crans (6) de la bague extérieure (3) ou inversement le patin (4) étant cranté extérieurement et la bague extérieure (3) étant pourvue intérieurement de moyens d'accrochage coopérant avec les crans du patin, et les moyens à ressort (21, 24) sollicitant le patin (4) en rotation relativement à la bague extérieure (3).

2. Dispositif de poussoir à excentrique selon la revendication 1, **caractérisé en ce que** la bague extérieure (3) comporte intérieurement plusieurs séries (5) de crans (6), réparties sur sa circonférence, tandis que le patin (4) est pourvu à sa périphérie externe (16) de lames élastiques (17) saillantes, espacées circonférentiellement et coopérant avec les crans (6) de la bague extérieure (3), ou inversement le patin (4) comporte extérieurement plusieurs séries de crans tandis que la bague extérieure (3) comporte intérieurement des lames élastiques espacées, chaque lame élastique (17) étant prévue pour coopérer avec l'une des séries (5) de crans (6).

3. Dispositif de poussoir à excentrique selon la revendication 2, **caractérisé en ce que** la disposition des séries (5) de crans (6) de la bague extérieure (3) ou du patin rotatif (4) et des lames élastiques (17) du patin (4) ou de la bague (3) est telle que, lorsque certains crans (6) sont en prise avec les lames élastiques (17) correspondantes, d'autres crans (6) appartenant à d'autres séries (5) se trouvent en attente, de manière à multiplier les positions angulaires d'accrochage du patin (4) relativement à la bague extérieure (3).

4. Dispositif de poussoir à excentrique selon la revendication 2 ou 3, **caractérisé en ce que** la bague extérieure (3) comporte intérieurement une partie annulaire sur laquelle sont formées les séries (5) de crans (6), et au moins une autre partie annulaire adjacente à la précédente, sur laquelle sont formées des surfaces de contact et de guidage (8) coopérant avec la périphérie externe (16) du patin (4).

5. Dispositif de poussoir à excentrique selon la revendication 4, **caractérisé en ce que** les surfaces de contact et de guidage (8) appartiennent à des formations en relief (7) de la bague extérieure (3), qui comportent encore des épaulements circonférentiels (9) pour l'arrêt en translation axiale du patin (4).

6. Dispositif de poussoir à excentrique selon l'une des revendications 1 à 5, **caractérisé en ce que** la bague extérieure (3) comporte, extérieurement, au moins un ergot (11) prévu pour l'immobilisation en rotation de cette bague extérieure (3), relativement au carter de direction (12) dans lequel est montée ladite bague (3).

7. Dispositif de poussoir à excentrique selon l'une des revendications 1 à 6, **caractérisé en ce que** les moyens à ressort comprennent au moins un ressort interne (21), monté entre une jambe de force (13) intérieure de la bague extérieure (3) et une surface d'appui (22) prévue sur le patin (4), le ressort interne (21) sollicitant ainsi le patin (4) en rotation dans le sens désiré.

8. Dispositif de poussoir à excentrique selon la revendication 7, **caractérisé en ce qu'**un trou (14) apte à recevoir un ergot (20) amovible, utilisable lors des opérations de montage du dispositif, est percé dans la jambe de force (13) de la bague extérieure (3), l'ergot (20) étant aussi introduit dans un trou (19) du patin (4).

9. Dispositif de poussoir à excentrique selon l'une des revendications 1 à 7, **caractérisé en ce que** les moyens à ressort comprennent un ressort externe (24), agissant par l'intermédiaire d'un doigt de poussée (25) sur le patin (4).

10. Dispositif de poussoir à excentrique selon la revendication 9, **caractérisé en ce que** la bague extérieure (3) comporte une ouverture (26) traversée par le doigt de poussée (25) pour atteindre le patin (4).

## Patentansprüche

1. Schiebevorrichtung mit Exzenter für eine Zahnstangenlenkung eines Kraftfahrzeugs, wobei die Schiebevorrichtung (2) einen ringförmigen Gleitschuh (4) umfasst, dessen innerer Umfang (15) im Verhältnis zum äußeren Umfang (16) exzentrisch angeordnet ist, wobei der besagte Gleitschuh (4) drehend montiert und von Federmitteln in eine Richtung in Drehung versetzt wird und dazu vorgesehen ist, um mit seinem exzentrisch angeordneten inneren Umfang (15) an der Rückseite der Zahnstange (23) anzuliegen, um diese in Richtung der Zähne des Lenkritzels zurückzudrücken, wobei die Schiebevorrichtung (2) mit Exzenter mit einem Mechanismus zum automatischen Spielausgleich versehen ist, **dadurch gekennzeichnet, dass** der Mechanismus zum Spielausgleich einen festen äußeren Ring (3) umfasst, in dessen Inneren der Gleitschuh (4) drehend montiert ist, wobei der äußere Ring (3) innen mit Rasten versehen ist und der Gleitschuh (4) an seinem äußeren Umfang (16) mit Einhakmitteln versehen ist, die mit den Rasten (6) des äußeren Rings (3) zusammenwirken, oder umgekehrt der Gleitschuh (4) außen mit Rasten versehen ist und der äußere Ring (3) innen mit Einhakmitteln versehen ist, die mit den Rasten des Gleitschuhs zusammenwirken, und die Federmittel (21, 24) den Gleitschuh (4) im Verhältnis zum äußeren Ring (3) in Drehung versetzen.

2. Schiebevorrichtung mit Exzenter nach Anspruch 1, **dadurch gekennzeichnet, dass** der äußere Ring (3) innen mehrere Reihen (5) von Rasten (6) umfasst, die über dessen Umfang verteilt sind, während der Gleitschuh (4) an seinem äußeren Umfang (16) mit überstehenden elastischen Blättern (17) versehen ist, die über den Umfang verteilt sind, und mit den Rasten (6) des äußeren Rings (3) zusammenwirken, oder umgekehrt der Gleitschuh (4) außen mehrere Reihen an Rasten umfasst, während der äußere Ring (3) innen vereinzelte elastische Blätter umfasst, wobei jedes elastische Blatt (17) vorgesehen ist, um mit einer der Reihen (5) von Rasten (6) zusammenzuwirken.

3. Schiebevorrichtung mit Exzenter nach Anspruch 2, **dadurch gekennzeichnet, dass** die Anordnung der Reihen (5) von Rasten (6) des äußeren Rings (3) oder des drehenden Gleitschuhs (4) und der elastischen Blätter (17) des Gleitschuhs (4) oder des Rings (3) derart gestaltet ist, dass, wenn bestimmte Rasten (6) mit den entsprechenden elastischen Blättern (17) in Eingriff stehen, sich andere Rasten (6), die anderen Reihen (5) angehören, in Wartestellung befinden, sodass die Winkelstellungen zum Einhaken des Gleitschuhs (4) in Bezug auf den äußeren Ring (3) vervielfacht werden.

4. Schiebevorrichtung mit Exzenter nach Anspruch 2 oder 3, **dadurch gekennzeichnet, dass** der äußere Ring (3) innen einen ringförmigen Abschnitt umfasst, auf dem die Reihen (5) von Rasten (6) ausgebildet sind, und zumindest einen anderen ringförmigen Abschnitt, der neben dem vorherigen liegt, auf dem Kontakt- und Führungsflächen (8) ausgebildet sind, die mit dem äußeren Umfang (16) des Gleitschuhs (4) zusammenwirken.

5. Schiebevorrichtung mit Exzenter nach Anspruch 4, **dadurch gekennzeichnet, dass** die Kontakt- und Führungsflächen (8) zu hervorgehobenen Formationen (7) des äußeren Rings (3) gehören, die noch umlaufende Ringschultern (9) zum Anhalten des axialen Vorschubs des Gleitschuhs (4) umfassen.

6. Schiebevorrichtung mit Exzenter nach einem der Ansprüche 1 bis 5, **dadurch gekennzeichnet, dass** der äußere Ring (3) außen zumindest eine Kralle (11) umfasst, die zum Anhalten der Drehbewegung dieses äußeren Rings (3) in Bezug auf das Lenkgehäuse (12) vorgesehen ist, in dem der besagte Ring (3) montiert ist.

7. Schiebevorrichtung mit Exzenter nach einem der Ansprüche 1 bis 6, **dadurch gekennzeichnet, dass** die Federmittel zumindest eine innere Feder (21) umfassen, die zwischen einer inneren Stützstrebe (13) des äußeren Rings (3) und einer Auflagefläche (22) montiert ist, die auf dem Gleitschuh (4) vorgesehen ist, wobei die innere Feder (21) dadurch den Gleitschuh (4) in die gewünschte Richtung zum Drehen bringt.

8. Schiebevorrichtung mit Exzenter nach Anspruch 7, **dadurch gekennzeichnet, dass** ein Loch (14) in die Stützstrebe (13) des äußeren Rings (3) gebohrt ist, das in der Lage ist, eine abnehmbare Kralle (20) aufzunehmen, die bei Vorgängen zur Montage der Vorrichtung verwendet werden kann, und die Kralle (20) auch in ein Loch (19) des Gleitschuhs (4) eingeführt wird.

9. Schiebevorrichtung mit Exzenter nach einem der Ansprüche 1 bis 7, **dadurch gekennzeichnet, dass** die Federmittel eine äußere Feder (24) umfassen, die über einen Schubstift (25) auf den Gleitschuh (4) einwirken.

10. Schiebevorrichtung mit Exzenter nach Anspruch 9, **dadurch gekennzeichnet, dass** der äußere Ring (3) eine Öffnung (26) umfasst, durch die der Schubstift (25) geführt wird, um den Gleitschuh (4) zu erreichen.

## Claims

1. An eccentric pusher device for a rack-and-pinion steering of a motor vehicle, the pusher device (2) comprising an annular-shaped pad (4) the inner periphery (15) of which is eccentric relative to the outer periphery (16), said pad (4) being rotatably mounted and biased in rotation in one direction by spring means and being provided to be applied via its inner periphery (15) eccentric against the back of the rack (23) so as to push back the latter toward the teeth of the steering pinion, the eccentric pusher device (2) being provided with a clearance self-adjusting mechanism, **characterized in that** the clearance adjusting mechanism comprises a fixed outer ring (3), inside which the pad (4) is rotatably mounted, the outer ring (3) being notched internally and the pad (4) being provided at its outer periphery (16) with attachment means cooperating with the notches (6) of the outer ring (3) or conversely the pad (4) being notched externally and the outer ring (3) being provided internally with attachment means cooperating with the notches of the pad, and the spring means (21, 24) biasing the pad (4) in rotation relatively to the outer ring (3).

2. The eccentric pusher device according to claim 1, **characterized in that** the outer ring (3) includes internally several series (5) of notches (6), distributed over its circumference, whereas the pad (4) is provided at its outer periphery (16) with protruding elastic blades (17), spaced circumferentially and cooperating with the notches (6) of the outer ring (3), or conversely the pad (4) includes externally several series of notches whereas the outer ring (3) includes internally spaced elastic blades, each elastic blade (17) is intended to cooperate with one of the series (5) of notches (6).

3. The eccentric pusher device according to claim 2, **characterized in that** the arrangement of the series (5) of notches (6) of the outer ring (3) or the rotating pad (4) and of the elastic blades (17) of the pad (4) or the ring (3) is such that, when some notches (6) are engaged with the corresponding elastic blades (17), other notches (6) belonging to other series (5) are in standby, in a way to multiply the attachment angular positions of the pad (4) relatively to the outer ring (3).

4. The eccentric pusher device according to claim 2 or 3, **characterized in that** the outer ring (3) includes internally an annular portion on which are formed the series (5) of notches (6), and at least another annular portion adjacent to the first one, on which are formed contact and guiding surfaces (8) cooperating with the outer periphery (16) of the pad (4).

5. The eccentric pusher device according to claim 4, **characterized in that** the contact and guiding surfaces (8) belong to raised formations (7) of the outer ring (3), which include also circumferential shoulders (9) for the axial translation stop of the pad (4).

6. The eccentric pusher device according to any of claims 1 to 5, **characterized in that** the outer ring (3) includes, externally, at least one lug (11) provided for the immobilization in rotation of this outer ring (3), relatively to the steering casing (12) in which said ring (3) is mounted.

7. The eccentric pusher device according to any of claims 1 to 6, **characterized in that** the spring means comprise at least one inner spring (21), mounted between an inner support leg (13) of the outer ring (3) and a bearing surface (22) provided on the pad (4), the inner spring (21) thus biasing the pad (4) in rotation in the desired direction.

8. The eccentric pusher device according to claim 7, **characterized in that** a hole (14) able to receive a removable lug (20), usable during mounting operations of the device, is drilled in the support leg (13) of the outer ring (3), the lug (20) being also introduced in a hole (19) of the pad.

9. The eccentric pusher device according to any of claims 1 to 7, **characterized in that** the spring means comprise at least one outer spring (24), acting by means of a thrust finger (25) on the pad (4).

10. The eccentric pusher device according to claim 9, **characterized in that** the outer ring (3) includes an opening (26) crossed by the thrust finger (25) to reach the pad (4).
